Europäisches Patentamt

European Patent Office

Office européen des brevets

(19)

(11) EP 0 614 103 B1

# (12) FASCICULE DE BREVET EUROPEEN

(45) Date de publication et mention
de la délivrance du brevet:
**09.07.1997 Bulletin 1997/28**

(51) Int Cl.⁶: **G02B 26/10, H04N 3/09**

(21) Numéro de dépôt: **94400433.2**

(22) Date de dépôt: **01.03.1994**

(54) **Lunette à miroirs oscillants pour la vision infrarouge**

Infrarotfernrohr mit Schwingspiegel

Infrared telescope with oscillating mirrors

(84) Etats contractants désignés:
**DE FR GB**

(30) Priorité: **03.03.1993 FR 9302455**

(43) Date de publication de la demande:
**07.09.1994 Bulletin 1994/36**

(73) Titulaire: **THOMSON-CSF**
**75008 Paris (FR)**

(72) Inventeurs:
• **Rollin, Joel, THOMSON-CSF**
**F-92402 Courbevoie Cedex (FR)**
• **Gonnaud, Isabelle, THOMSON-CSF**
**F-92402 Courbevoie Cedex (FR)**

(74) Mandataire: **Lincot, Georges et al**
**THOMSON-CSF-S.C.P.I.,**
**13, Avenue du Président**
**Salvador Allende**
**94117 Arcueil Cédex (FR)**

(56) Documents cités:
EP-A- 0 050 970          GB-A- 2 025 724
US-A- 3 742 238          US-A- 3 760 181
US-A- 4 017 732

• L'ONDE ELECTRIQUE, vol. 68, no. 2, Mars 1988, Paris, FR, pp 45-52; PERRIN: 'Principes Généraux des Caméras Thermiques'
• MEASURES, no. 622, 28 Mai 1990, Paris, FR, pp 43-47; PAJANI: 'Thermographie Infrarouge: La Méchanique Fait de la Résistance...'

## Description

La présente invention concerne une lunette à miroirs oscillants pour la vision infrarouge.

Elle s'applique à la réalisation de dispositifs d'imagerie thermique à miroirs oscillants fonctionnant dans les bandes infrarouges comprises par exemple entre 3 et 5µm ou 8 et 12µm et notamment à celles de dispositifs portables économiques comprenant des mosaïques de cellules optoélectroniques ayant un faible nombre d'éléments sensibles.

Dans les lunettes à miroir oscillant pour la vision infrarouge la scène observée par l'objectif est focalisée après balayage sur un détecteur infrarouge. Le signal électrique émis par ce détecteur et qui est fonction de la luminance des objets présents dans la scène, commande une émission de lumière dans le visible en agissant sur une diode électroluminescente. Ceci impose pour reconstituer dans le visible la scène observée d'effectuer un balayage des diodes électroluminescentes en synchronisme avec le balayage infrarouge. Cependant dans les réalisations les plus classiques, telles que décrites par exemple dans l'article "Principes généraux des caméras thermiques" de J.C. PERRIN publié dans l'Onde Electrique mars 1988 volume 68 ,° 2, page 45, figure 12, un balayage commun est mis en oeuvre pour compenser les erreurs de balayage et harmoniser les voies infrarouges et visibles. Mais alors il faut prévoir avec ce type de réalisation l'adjonction de séparateurs dichroïques, séparant en amont et en aval du bloc de balayage à miroirs oscillants les faisceaux visibles des faisceaux infrarouges ce qui occasionne une perte notable d'une portion des flux lumineux à la fois dans le visible et l'infrarouge. D'autre part, comme il s'agit généralement d'explorer des scènes infrarouges dans des intervalles de temps déterminés, relativement courts, le balayage horizontal doit s'effectuer à cadence rapide d'autant plus que la mosaïque de détection du détecteur comporte peu d'éléments sensibles, afin de couvrir toute la scène observée sans zone morte. Aussi une des solutions les plus couramment employée consiste à utiliser des miroirs galvano métriques oscillant autour d'axes perpendiculaires, comme cela est décrit par exemple dans le brevet européen 0 050 970, où un des miroirs oscillants est utilisé en double réflexion de façon à diminuer les angles de rotation. Mais comme le montre l'exemple décrit dans ce brevet, le dispositif de balayage fonctionne en faisceaux parallèles et comme la taille des miroirs est réduite pour pouvoir osciller à des fréquences élevées, un objectif afocal infrarouge est placé devant le dispositif à miroir oscillant pour augmenter le diamètre de la pupille d'entrée sur la voie infrarouge et diminuer le champ élémentaire dans l'espace objet, ce champ élémentaire étant défini par l'angle sous-tendu dans l'espace objet associé à un détecteur de la mosaïque infrarouge. Cette solution impose une réalisation complexe d'un objectif afocal du type de celui qui est décrit par exemple dans le brevet des Etats-Unis d'Amérique 4 397 529, au moins trois lentilles et une asphérique. Son introduction dans un matériel portable rend cette solution peu attractive car elle augmente notablement le poids et l'encombrement de la lunette ainsi que son prix de revient.

Le but de l'invention est de pallier les inconvénients précités.

Dans le brevet des Etats-Unis d'Amérique 3 760 181 est décrit un autre système pour la vision infrarouge.

A cet effet, l'invention a pour objet une lunette à miroirs oscillants pour vision infrarouge comportant :

- un objectif de tête pour recevoir des rayons infrarouges provenant d'une scène observée,
- un premier séparateur de faisceaux visibles et infrarouge placé entre d'une part, un viseur de jour et d'autre part, un dispositif de balayage à miroirs oscillants,
- un deuxième séparateur visible infrarouge placé entre d'une part, le détecteur infrarouge et le dispositif de balayage et d'autre part, entre le dispositif de balayage et une matrice de diodes électroluminescentes pour séparer les rayons infrarouges provenant du dispositif de balayage à destination du détecteur infrarouge des rayons visibles émis par le diode électroluminescente, l'émission des rayons visibles par la diode électroluminescente étant commandée par le signal émis par le détecteur infrarouge sous l'impact des rayons infrarouges, caractérisé en ce que l'objectif de tête est formé par une lentille convergente pour permettre un balayage du dispositif de balayage en faisceau infrarouge convergent, en ce qu'une lentille infrarouge placée entre le dispositif de balayage et un détecteur infrarouge pour focaliser chaque point de la scène observée sur le détecteur, et en ce que les diodes électroluminescentes sont placée au foyer d'une lentille visible de collimation pour permettre un balayage du dispositif de balayage en faisceau visible de rayons parallèles.

L'invention a pour principal avantage qu'elle permet de simplifier l'implantation du système optique infrarouge et d'optimiser les transmissions thermiques en n'utilisant qu'une seule lame dichroïque.

D'autres caractéristiques et avantages de l'invention apparaîtront à l'aide de la description qui suit faite en regard des dessins annexés qui représentent :

- La figure 1 l'architecture générale d'une lunette infrarouge selon l'invention.
- Les figures 2A et 2B le dispositif à balayage à deux miroirs du type de celui décrit dans le brevet européen 0 050 970.
- La figure 2C un autre dispositif de balayage à deux miroirs selon l'art antérieur.
- La figure 3 un schéma déplié représentant selon l'art antérieur la marche d'un faisceau de rayons parallèles au travers d'un système optique comportant un objectif d'entrée afocal à plusieurs lentilles et un dispositif de balayage à deux miroirs.

- La figure 4 un schéma déplié représentant selon l'invention la marche d'un faisceau de rayons convergents au travers du système optique de la lunette infrarouge sur la base de l'exemple du scanner détaillé à la figure 2A.
- La figure 5 l'objectif de tête de la lunette selon l'invention.
- La figure 6A un exemple d'une combinaison optique calculée sur la base de l'implantation de la figure 4.
- Les figures 6B et 6C un exemple d'une combinaison optique, hors lentille de collimation $C_i$, sur la base du dispositif de balayage de la figure 2C.
- Les figures 7A et 7B le dispositif mélangeur des voies infrarouge et visible avant traversée et balayage par le dispositif à miroirs croisés mis en oeuvre par l'invention.

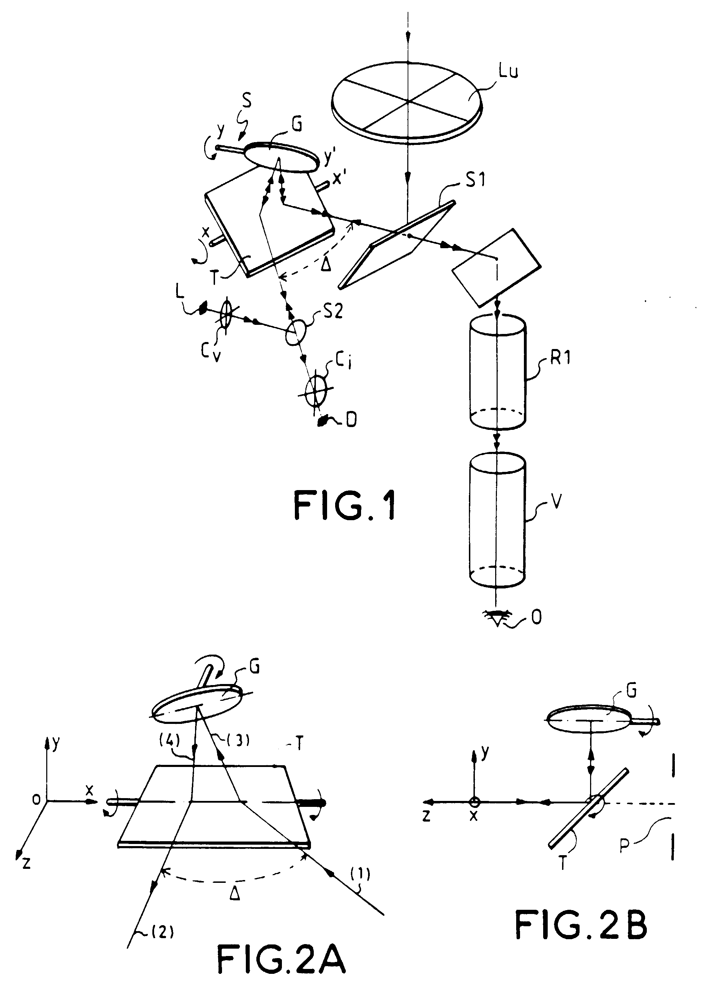

La lunette infrarouge selon l'invention qui est représentée à la figure 1 comporte une lentille infrarouge $L_u$, un séparateur $S_1$ de faisceaux visible et infrarouge, un dispositif $R_1$ de transport de pupille visible, un viseur de jour V, un ensemble S à deux miroirs G et T oscillant autour d'axes yy' et xx' croisés à 90°, une lentille infrarouge $C_i$, un détecteur D infrarouge, une diode électroluminescente L, une lentille visible de collimation $C_v$ et un deuxième séparateur $S_2$ de faisceaux visible et infrarouge. L'ensemble des éléments précédents est centré autour d'axes optiques infrarouge et visible, l'axe optique d'une voie infrarouge étant repéré par une flèche et le chemin emprunté par un axe optique visible étant repéré par un ensemble deux flèches. Dans le schéma de la figure 1, l'oeil de l'observateur est placé en O devant la lentille avant du viseur de jour V. La scène infrarouge qui est observée est focalisée à l'aide de la lentille $L_u$ sur le détecteur infrarouge D au travers du séparateur visible $S_1$ et du dispositif de balayage miroir oscillant S qui assure le balayage de la scène observée. La lentille infrarouge $C_i$ permet de reformer l'image sur le détecteur infrarouge D. Le signal électrique issu de l'organe de détection D qui est fonction du flux de rayon infrarouge reçu, commande l'intensité lumineuse émise par la diode électroluminescente L qui est collimatée par la lentille visible de collimation $C_v$. Pour fournir une image visible, le flux issu de la source L est déplacé par le dispositif de balayage à miroirs croisés S, et transporté à travers le séparateur $S_1$ dans le viseur V par le dispositif afocal $R_1$ de grossissement G. Le séparateur $S_1$ est formé par une lame dichroïque qui sépare les voies infrarouge et visible. Sur la figure 1 cette lame réfléchit les rayons infrarouges provenant de la lentille $L_u$ et transmet la lumière visible à destination du viseur V.

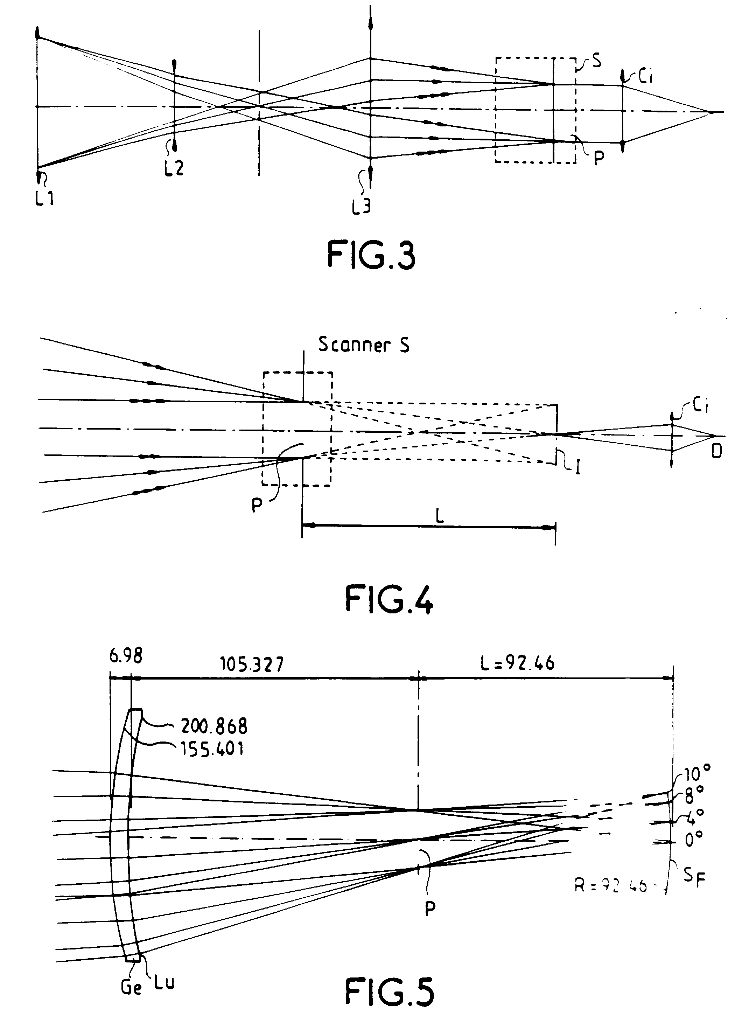

Le dispositif de balayage S comporte deux miroirs T et G articulés autour de deux axes croisés à 90° xx' et yy' respectivement. Dans les représentations des figures 2A et 2B le miroir G a une dimension réduite par rapport au miroir T pour lui permettre d'osciller très rapidement autour de son axe de rotation YY'. Le miroir T est de dimensions beaucoup plus grandes mais ceci n'a pas d'importance car il doit osciller autour de son axe xx' beaucoup plus lentement que ne le fait le miroir G autour de l'axe de rotation yy'. Lorsqu'un tel système de balayage est utilisé de la façon décrite dans le brevet EP n° 0 050 970 précité, avec des faisceaux parallèles suivant la marche des faisceaux dépliés de la figure 3 au travers d'un objectif afocal à trois lentilles $L_1$, $L_2$ et $L_3$, les amplitudes de rotations angulaires des miroirs T et G sont définies par les relations

$$\alpha_v \approx \frac{G\theta_v}{2(1 + \cos\Delta)} \qquad (1)$$

pour le miroir T et

$$\alpha_H \approx \frac{G\theta_H}{2} \qquad (2)$$

pour le miroir G.

où G représente le grossissement de l'afocal infrarouge de l'objectif de tête et $\theta_v$ et $\theta_H$ désignent respectivement les champs verticaux et horizontaux de l'objet. $\Delta$ désigne l'angle sur la figure 2A entre le rayon incident 1 appliqué sur le miroir T et le rayon émergeant 2 obtenu après réflexion sur le miroir G, pour le centre de champ.

Dans l'exemple de solution mise en oeuvre par l'invention et qui est figurée à la figure 4, l'objectif frontal qui est composé de la lentille $L_u$ de focal $F_1$, fonctionne avec une ouverture relative qui est suffisamment faible pour éviter les aberrations sphériques. Une lentille simple, sphérique, en germanium suffit alors pour s'affranchir des aberrations sphériques. L'image intermédiaire I est reprise par un transport d'images de la lentille $C_i$ de grandissement g située devant le détecteur D. Ce transport d'image travaille avec un champ très réduit déterminé par les dimensions de la mosaïque détectrice du détecteur D. En désignant par F la distance focale totale de la voie infrarouge, la distance locale $F_1$ est déterminée par la relation

$$F_1 = \frac{F}{g} \qquad (3)$$

La distance $L$ qui sépare la position de la pupille de balayage de l'image intermédiaire I est alors égale à

$$L = \frac{F}{g} \times \frac{\phi_s}{\phi_E} \qquad (4)$$

où $\phi_E$ est le diamètre de la pupille d'entrée de la voie infrarouge au niveau du dispositif de balayage.

Dans ces conditions les angles de balayage pour couvrir les champs $\theta_v$ et $\theta_H$ sont déterminés par les relations :

$$\alpha_v = \frac{\phi_E}{\phi_s} \times \frac{\phi_v}{2(1+\cos\Delta)} \qquad (5)$$

et

$$\alpha_H = \frac{\phi_E}{\phi_s} \times \frac{\phi_H}{2} \qquad (6)$$

Ceci permet de constater par rapport au cas où le dispositif de balayage balaye des faisceaux parallèles que le gain $G$ qui est défini par le rapport et $\frac{E}{\phi_s}$ que les angles de balayage restent les mêmes. L'avantage de cette solution est que le balayage en faisceau convergent permet de remplacer le système afocal complexe de la figure 3 par une lentille simple sans pour autant que des défocalisations différentielles dégradent la qualité de l'image, alors qu'il est connu qu'un balayage en faisceau convergent entraîne l'apparition de surfaces d'images courbes. Dans le cas des miroirs G et T, les rayons de courbure $R_G$ et $R_T$ induits par le balayage de ces miroirs vérifient respectivement les relations :

$$R_G = L \qquad (7)$$

$$R_T = (1+\cos\Delta)\,\frac{L^2}{L(1+\cos\Delta)-d} \qquad (8)$$

où d est la distance séparant les axes xx' et yy' de rotation des miroirs. De la sorte comme l'objectif de tête formé par la lentille $L_u$ est de révolution autour de son axe optique, si le rayon de courbure $R_G$ est trop différent du rayon $R_T$ les défocalisations créées par le balayage en bord de champ horizontal ou en bord de champ vertical peuvent en effet dégrader la qualité d'image du dispositif infrarouge. Cependant en prenant dans l'exemple de la figure 4 les valeurs suivantes

g = 0,35
$F_1$ = 205,7 mm
$L$ = 92,5 mm

avec
d = 20 mm
et
$\Delta$ = 45°
les relations (7) et (8) précédentes donnent des rayons de courbure
$R_G$ = 92,5 mm

et
$R_T$ = 105,9 mm

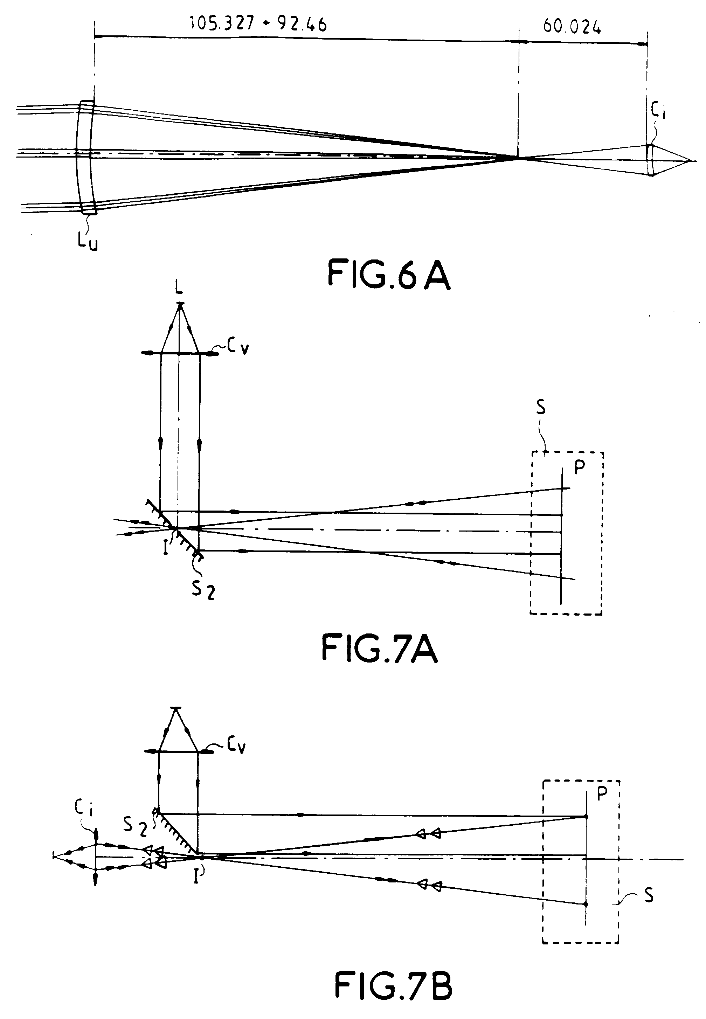

Ceux-ci peuvent être considérés comme voisins. Ils forment dès lors des défocalisations différentielles qui dégradent peu la qualité de l'image. En privilégiant celle-ci dans le champ horizontal réalisée par le balayage du miroir G, il est cependant nécessaire que la surface focale de l'objectif formé par la lentille $L_u$ épouse la courbure de la surface balayée par l'extrémité du rayon $R_G$. Comme l'objectif formé par la lentille $L_u$ est très simple il pourrait être difficile d'adapter la surface focale à la courbure de la surface générée par le balayage de façon rigoureuse bien que leur concavité respective soit de même signe. Mais cette désadaptation des courbures ne produit pas de dégradations notables sur la qualité d'image en bord de champ horizontal en prenant une distance focale d'objectif primaire $F_1$ comprises entre 180 et 250 mm. Des exemples de réalisation de combinaisons optiques calculées sur la base d'une implantation paraxiale correspondant à la figure 4 sont montrés aux figures 5 et 6. Sur la figure 5 un rayon de courbure R = 92,46 mm de la surface focale de la lentille $L_u$ est obtenu pour une lentille en Germanium de focale $F_1 \approx 205mm$, d'épaisseur 6,98 mm et de rayons intérieur et extérieur de 200,868 et 155,401 mm respectivement. Dans cette combinaison la pupille P de balayage est placée à une distance $L=92,46mm$ de la surface focale $S_F$. Le balayage représenté correspond à des diamètres angulaires de champ de 0°, 4°, 8° et 10° par rapport à l'axe optique. La combinaison représentée figure 6 montre le positionnement de la lentille $L_u$ de la figure 5 relativement à une lentille $C_i$ en Germanium dont le sommet est placé à 60,024 mm du foyer de la lentille $L_u$. Cette lentille a les caractéristiques suivantes :

- épaisseur au centre : 2 mm
- rayon face avant : 27,967 mm
- rayon face arrière : 66,617 mm
- coefficient de conicité : k = 11,2585.

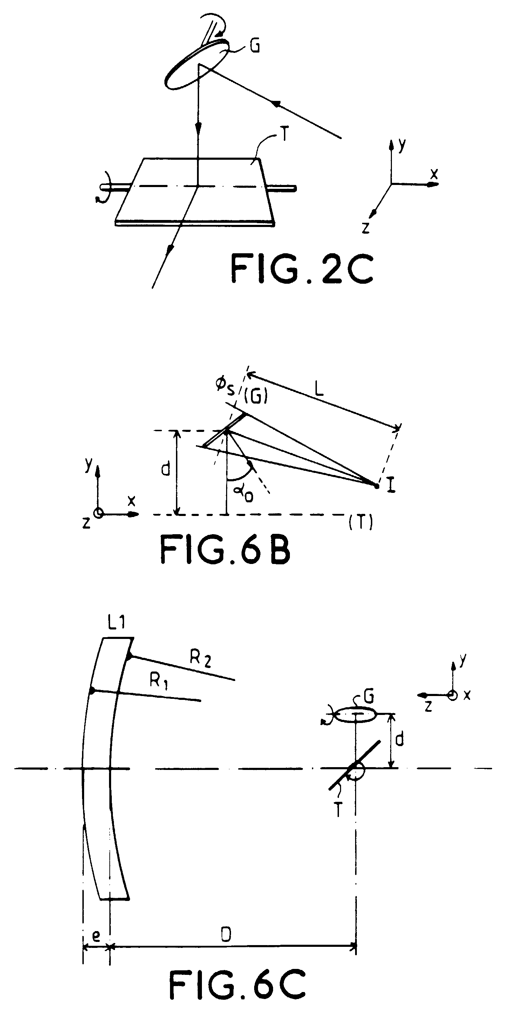

L'architecture de la voie infrarouge peut également s'accommoder d'un scanner du type de celui de la figure 2C.

Un exemple de réalisation, hors lentille de reprise, est détaillé en figure 6B.

Avec les notations de cette figure, dans un exemple de réalisation, on a :

d = 20 mm
L = 86,68 mm
$\alpha_0$ = 30° (angle entre la normale du miroir G et la verticale pour la position centre du champ)
$\phi_s$ = 19 mm
$R_1$ = 154 mm
$R_2$ = 197,7 mm
e = 7,66 mm
D = 89,39 mm
I = image intermédiaire

Dans cet exemple, les chutes de qualité sont plus sensibles dans le champ, mais restent compatibles d'un matériel bas coût, où surtout importe la qualité au centre du champ.

Comme le montre la figure 1, la voie visible est constitué d'un collimateur $C_v$ et d'un dispositif afocal $R_1$ de grossissement $G_v$ qui permet de conjuguer la pupille P du dispositif de balayages sur la pupille d'entrée du viseur V. Le dispositif de balayage S est utilisé sur cette voie en faisceau parallèle. Le grossissement $G_v$ est adapté pour que le grossissement total de la lunette infrarouge soit unitaire. Les angles de rotation des miroirs T et G sont définis de la façon décrite précédemment par les caractéristiques de la voie infrarouge. Le grossissement visible est obtenu par la relation :

$$G_v = \frac{\theta_E}{\theta_s},$$

où $\theta_E$ est l'angle de champ en sortie du balayage et $\theta_S$ est l'angle de champ en entrée du viseur V.
soit pour reprendre l'exemple des figures 4, 5 et 6 $G_v = 2{,}225$.

Si le diamètre de la pupille d'entrée de la voie infrarouge est dicté par l'obtention des performances de détection et de reconnaissance infrarouges, celle de la pupille visible est liée aux caractéristiques du viseur de reprise V extérieur à la lunette infrarouge. La taille de la pupille visible reste généralement au diamètre de la pupille infrarouge. En reprenant l'exemple précédent, le diamètre de la pupille visible vaut dans ces conditions environ 20 mm en sortie du dispositif de reprise $R_1$. Au niveau du dispositif de balayage S ce diamètre est transformé en un diamètre $\phi'_s$ tel que

$$\phi'_s = \frac{20}{2{,}225} \approx 9 \ mm$$

ce qui montre que seule une petite portion des miroirs T et G est utilisée sur la voie visible.

L'utilisation du dispositif de balayage en faisceau convergent sur la voie infrarouge et en faisceaux parallèles sur la voie visible permet de s'affranchir de la présence de la lame dichroïque située avant le bloc de balayage. En effet, le mélange des voies infrarouge et visible avant traversée et balayage par le dispositif de balayage S s'effectue selon l'une des deux variantes de réalisation de séparateurs représentées aux figures 7A et 7B. Sur la figure 7A le mélange s'effectue à l'aide d'un miroir plan $S_2$ troué en son centre placé au niveau de l'image intermédiaire I. Ce miroir laisse passer les rayons infrarouges sans vignettage. La voie visible qui transporte le faisceau de rayons parallèles émis en sortie de la lentille de collimation $C_v$ par la source électroluminescente L fonctionne alors avec une très légère occultation centrale.

Sur la figure 7B, le miroir $S_2$ est excentré par rapport à la voie infrarouge au niveau de l'image intermédiaire. Cette implantation repose sur le fait que dans le dispositif de balayage les tailles de pupilles visibles sont plus faibles que les diamètres de pupilles infrarouges.

## Revendications

1. Lunette à miroirs oscillants (T, G) pour vision infrarouge comportant :

   - un objectif de tête ($L_u$) pour recevoir des rayons infrarouges provenant d'une scène observée,
   - un premier séparateur ($S_1$) de faisceaux visibles et infrarouge placé entre d'une part, un viseur de jour (V) et d'autre part, un dispositif de balayage (S) à miroirs oscillants (T, G),
   - un deuxième séparateur visible infrarouge ($S_2$) placé entre d'une part, le détecteur infrarouge (D) et le dispositif de balayage (S) et d'autre part, entre le dispositif de balayage (S) et une matrice de diodes électroluminescentes (L) ou de diodes laser pour séparer les rayons infrarouges provenant du dispositif de balayage (S) à destination du détecteur infrarouge (D) des rayons visibles émis par le diode électroluminescente (L), l'émission des rayons visibles par les diodes électroluminescentes (L) étant commandée par le signaux émis par le détecteur infrarouge (D) sous l'impact des rayons infrarouges, caractérisé en ce que l'objectif de tête est formé par une lentille convergente ($L_u$) pour permettre un balayage du dispositif de balayage (S) en faisceau infrarouge convergent, en ce qu'une lentille infrarouge ($C_i$) est placée entre le dispositif de balayage (S) et un détecteur infrarouge (D) pour focaliser chaque point de la scène observée sur le détecteur, et en ce que les diodes électroluminescentes (L) ou les diodes laser sont placée au foyer d'une lentille visible de collimation ($C_v$) pour permettre un balayage du dispositif de balayage (S) en faisceau visible de rayons parallèles.

2. Lunette selon la revendication 1 caractérisé en ce que le deuxième séparateur visible/infrarouge ($S_2$) est formé par un miroir plan percé en son centre pour laisser passer les rayons infrarouges.

3. Lunette selon la revendication 1 caractérisé en ce que le deuxième séparateur visible/infrarouge ($S_2$) est formé par un miroir plan excentré par rapport au faisceau infrarouge pour laisser passer les rayons infrarouges et réfléchir les rayons visibles émis par la diode électroluminescente (L) en direction du dispositif de balayage (S).

4. Lunette selon l'une quelconque des revendications 1 à 3 caractérisé en ce que le deuxième séparateur ($S_2$) est placé dans le plan de l'image intermédiaire (I) de la lentille convergente ($L_u$) obtenue en sortie du dispositif de balayage (S).

5. Lunette selon l'une quelconque des revendications 1 à 4 caractérisé en ce que l'image intermédiaire (I) est reprise par la lentille infrarouge ($C_i$) pour être focalisée sur le détecteur d'infrarouge (D).

6. Lunette selon l'une quelconque des revendications 1 à 5 caractérisé en ce qu'elle comprend une voie visible composée de la lentille visible de collimation ($C_v$) et d'un dispositif afocal ($R_1$) de grossissement ($G_v$) pour conjuguer la pupille (P) du dispositif de balayage sur la pupille d'entrée d'un viseur (V), le grossissement ($G_v$) étant adapté pour que le grossissement total de la lunette infrarouge soit unitaire.

7. Lunette selon l'une quelconque des revendications 1 à 6 caractérisé en ce que la lentille convergente ($L_u$) est en Germanium.

8. Lunette selon l'une quelconque des revendications 1 à 7, caractérisé en ce que le dispositif de balayage (S) est formé par deux miroirs oscillants (T, G) articulés respectivement sur deux axes croisés à 90° l'un de l'autre.

## Patentansprüche

1. Fernglas mit oszillierenden Spiegeln (T, G) für die Infrarotbeobachtung, mit:

- einem Kopfobjektiv ($L_u$) für den Empfang von Infrarotstrahlen, die von einer beobachteten Szene ausgehen,
- einem ersten Trenner ($S_1$) von sichtbaren Strahlenbündeln und infraroten Strahlenbündeln, der zwischen einem Tagsucher (V) einerseits und einer Abtastvorrichtung (S) mit oszillierenden Spiegeln (T, G) andererseits angeordnet ist,
- einem zweiten Trenner($S_2$) von sichtbarem Licht und infrarotem Licht, der zwischen dem Infrarotdetektor (D) und der Abtastvorrichtung (S) einerseits und zwischen der Abtastvorrichtung (S) und einer Matrix (L) aus Elektrolumineszenzdioden oder Laserdioden andererseits angeordnet ist, um die von der Abtastvorrichtung (S) ausgehenden und zum Infrarotdetektor (D) gerichteten Infrarotstrahlen von den von der Elektrolumineszenzdiode (L) ausgesendeten sichtbaren Strahlen zu trennen, wobei die Aussendung der sichtbaren Strahlen durch die Elkroluminineszenzdioden (L) durch das Signal gesteuert wird, das vom Infrarotdetektor (D) bei Auftreffen von Infrarotstrahlen ausgesendet wird, dadurch gekennzeichnet, daß das Kopfobjektiv durch eine Sammellinse ($L_u$) gebildet ist, um eine Abtastung der Abtastvorrichtung (S) mit einem konvergenten Infrarotstrahlenbündel zu ermöglichen, daß zwischen der Abtastvorrichtung (S) und einem Infrarotdetektor (D) eine Infrarotlinse ($C_i$) angeordnet ist, um jeden Punkt der beobachteten Szene auf dem Detektor zu fokussieren, und daß die Elektrolumineszenzdioden (L) oder die Laserdioden im Brennpunkt einer Kollimatorlinse ($C_v$) für sichtbares Licht angeordnet ist, um eine Abtastung der Abtastvorrichtung (S) mit einem sichtbaren Strahlenbündel aus parallelen Strahlen zu ermöglichen.

2. Fernglas nach Anspruch 1, dadurch gekennzeichnet, daß der zweite Trenner ($S_2$) von sichtbarem Licht und infrarotem Licht durch einen ebenen Spiegel gebildet ist, der in seinem Zentrum durchlocht ist, um die infraroten Strahlen durchzulassen.

3. Fernglas nach Anspruch 1, dadurch gekennzeichnet, daß der zweite Trenner ($S_2$) von sichtbarem Licht und infrarotem Licht durch einen ebenen Spiegel gebildet ist, der in bezug auf das Infrarotstrahlenbündel exzentrisch angeordnet ist, um die Infrarotstrahlen durchzulassen und die sichtbaren Strahlen, die von der Elektrolumineszenzdiode (L) in Richtung zur Abtastvorrichtung (S) ausgesendet werden, zu reflektieren.

4. Fernglas nach irgendeinem der Ansprüche 1 bis 3, dadurch gekennzeichnet, daß der zweite Trenner ($S_2$) in der Ebene des Zwischenbildes (1) der Sammellinse ($L_u$), das am Ausgang der Abtastvorrichtung (S) erhalten wird, angeordnet ist.

5. Fernglas nach irgendeinem der Ansprüche 1 bis 4, dadurch gekennzeichnet, daß das Zwischenbild (1) von der Infrarotlinse ($C_i$) wieder aufgenommen wird, um auf dem Infrarotdetektor (D) fokussiert zu werden.

6. Fernglas nach irgendeinem der Ansprüche 1 bis 5, dadurch gekennzeichnet, daß es einen Weg für sichtbares Licht enthält, der aus der Kollimatorlinse für sichtbares Licht ($C_v$) und einer brennpunktlosen Vorrichtung ($R_1$) zur Vergrößerung ($G_v$) aufgebaut ist, um die Pupille (P) der Abtastvorrichtung der Eingangspupille eines Suchers (V) zuzuweisen, wobei die Vergrößerung ($G_v$) so angepaßt ist, daß die Gesamtvergrößerung des Infrarotfernglases Eins ist.

7. Fernglas nach irgendeinem der Ansprüche 1 bis 6, dadurch gekennzeichnet, daß die Sammellinse ($L_u$) aus Germanium besteht.

8. Fernglas nach irgendeinem der Ansprüche 1 bis 7, dadurch gekennzeichnet, daß die Abtastvorrichtung (S) aus zwei oszillierenden Spiegeln (T, G) gebildet ist, die jeweils um eine von zwei Achsen schwenkbar sind, die zueinander in einem Winkel von 90° gekreuzt sind.

**Claims**

1. Sight with oscillating mirrors (T, G) for infrared vision, including:

   - a head objective ($L_u$) for receiving infrared rays originating from an observed scene,
   - a first visible and infrared beam splitter ($S_1$) placed between, on the one hand, a day sight (V) and, on the other hand, a scanning device (S) with oscillating mirrors (T, G),
   - a second visible-infrared splitter ($S_2$) placed between, on the one hand, the infrared detector (D) and the scanning device (S) and, on the other hand, between the scanning device (S) and an array of light-emitting diodes (L) or diode lasers, for splitting the infrared rays, originating from the scanning device (S) and sent to the infrared detector (D) from the visible rays emitted by the light-emitting diode (L), the emission of the visible rays by the light-emitting diodes (L) being controlled by the signals emitted by the infrared detector (D) in response to the infrared rays, characterized in that the head objective is formed by a converging lens ($L_u$) to allow scanning by the scanning device (S) with a converging infrared beam, and in that an infrared lens ($C_i$) is placed between the scanning device (S) and an infrared detector (D) in order to focus each point in the observed scene on the detector, and in that the light-emitting diodes (L) or the diode lasers are placed at the focus of a collimating visible lens ($C_v$) to allow scanning by the scanning device (S) with a parallel-ray visible beam.

2. Sight according to Claim 1, characterized in that the second visible/infrared splitter ($S_2$) is formed by a plane mirror which is pierced-at its centre in order to transmit the infrared rays.

3. Sight according to Claim 1, characterized in that the second visible/infrared splitter ($S_2$) is formed by a plane mirror which is off-centre relative to the infrared beam, in order to transmit the infrared rays and reflect the visible rays emitted by the light-emitting diode (L) towards the scanning device (S).

4. Sight according to any one of Claims 1 to 3, characterized in that the second splitter ($S_2$) is placed in the plane of the intermediate image (I) of the converging lens ($L_u$) which is obtained at the output of the scanning device (S).

5. Sight according to any one of Claims 1 to 4, characterized in that the intermediate image (I) is taken up by the infrared lens ($C_i$) to be focused on the infrared detector (D).

6. Sight according to any one of Claims 1 to 5, characterized in that it comprises a visible path composed of the collimating visible lens ($C_v$) and an afocal device ($R_1$) of magnification ($G_v$) for making the pupil (P) of the scanning device intricate with the input pupil of a viewer (V), the magnification ($G_v$) being designed so that the total magnification of the infrared sight is one.

7. Sight according to any one of Claims 1 to 6, characterized in that the converging lens ($L_u$) is made of germanium.

8. Sight according to any one of Claims 1 to 7, characterized in that the scanning device (S) is formed by two oscillating mirrors (T, G), respectively articulated on two axes crossed at 90° to each other.

EP 0 614 103 B1

FIG.1

FIG.2A

FIG.2B

FIG.2C

FIG.6B

FIG.6C

FIG.3

FIG.4

FIG.5

FIG.6 A

FIG.7A

FIG.7B

11